Europäisches Patentamt

European Patent Office

Office européen des brevets

(11) Veröffentlichungsnummer: **0 264 587 B1**

# (12) EUROPÄISCHE PATENTSCHRIFT

(45) Veröffentlichungstag der Patentschrift: **06.03.91**

(51) Int. Cl.⁵: **F16L 47/04**

(21) Anmeldenummer: **87112514.2**

(22) Anmeldetag: **28.08.87**

(54) **Verbindung von Kunststoffrohren.**

(30) Priorität: **13.10.86 CH 4072/86**

(43) Veröffentlichungstag der Anmeldung:
**27.04.88 Patentblatt 88/17**

(45) Bekanntmachung des Hinweises auf die
Patenterteilung:
**06.03.91 Patentblatt 91/10**

(84) Benannte Vertragsstaaten:
**AT BE CH DE ES FR IT LI NL SE**

(56) Entgegenhaltungen:
| | |
|---|---|
| DE-B- 1 281 759 | DE-C- 3 520 874 |
| DE-U- 1 801 006 | US-A- 2 661 225 |
| US-A- 3 189 370 | US-A- 3 347 571 |
| US-A- 3 423 111 | US-A- 4 257 629 |

(73) Patentinhaber: **GEORG FISCHER AKTIENGE-SELLSCHAFT**
**Mühlentalstrasse 105**
**CH-8201 Schaffhausen(CH)**

(72) Erfinder: **Trösch, Paul**
**Buchthalerstrasse 109**
**CH-8203 Schaffhausen(CH)**

## Beschreibung

Die Erfindung betrifft eine Rohrverbindung, wie sie im Oberbegriff von Anspruch 1 gekennzeichnet ist.

Durch die DE-C-35 20 874 ist eine Rohrverbindung der eingangs genannten Art bekannt geworden, welche sich in der Praxis nur für Kunststoffrohre mit einer Wandstärke weniger als drei mm als geeignet erwiesen hat, da bei grösseren Wanddicken die Dichtheit bei Temperaturunterschieden nicht mehr gewährleistet war. Dies ergibt sich aus dem unterschiedlichen Wärmeausdehnungskoeffizienten zwischen Kunststoff und Metall, so dass bei grösseren Temperaturveränderungen, wie sie bei Sanitär-Installationen mit Kalt- und Warmwasser-Leitungen vorkommen, die Materialausdehnungsdifferenz bei Kunststoff-Wanddicken über drei mm so gross ist, dass die Dichtheit nicht mehr gewährleistet ist.

Es sind zwar entsprechende Rohrverbindungen bekannt geworden, welche zusätzlich als Rundgummiringe ausgebildete Dichtungsringe aufweisen, welche jedoch über die erforderliche gesamte Lebensdauer keine Dichtheit gewährleisten.

Aufgabe der vorliegenden Erfindung ist die Schaffung einer Rohrverbindung für Kunststoffrohre der eingangs genannten Art, welche auch bei Rohrwanddicken über drei mm eine einwandfreie Abdichtung ohne zusätzliche Dichtungen und einen festen Halt des Rohres bei wechselnden Belastungen und Temperaturschwankungen während der erforderlichen Lebensdauer gewährleistet.

Diese Aufgabe wird durch die im Anspruch 1 angegebene Lehre gelöst.

Durch die abgestufte Ausbildung der Stützhülse wird ein Teil zum Halten des Kunststoffrohres ausgebildet, ein anderer Teil zum Dichten. Damit wird erreicht, dass die jeweilige Partie optimal auf die zu erfüllende Aufgabe ausgebildet werden kann. In dem Bereich wo das Rohr abgedichtet wird, ist die Wandstärke auf das notwendige Minimum reduziert, wodurch die Materialdehnungsdifferenz bei Temperaturwechsel möglichst klein gehalten wird.

Weitere vorteilhafte Ausgestaltungen der Erfindung sind in den abhängigen Ansprüchen gekennzeichnet.

Die Erfindung ist in den beiliegenden Zeichnungen anhand von Ausführungsbeispielen dargestellt und nachfolgend beschrieben:
Es zeigen:

Fig. 1     eine Rohrverbindung, teils im Längsschnitt mit einer konischen Klemmhülse,

Fig. 2     eine Ausführungsvariante der in Figur 1 gezeigten Rohrverbindung,

Fig. 3     eine Rohrverbindung mit einer mehrteiligen Klemmhülse teils im Längsschnitt

Fig. 4     einen Schnitt entlang der Linie IV-IV von Figur 3.

Fig. 5     eine Ausführungsvariante von der in Fig. 3 gezeigten Rohrverbindung in einem vergrösserten Teillängsschnitt

Fig. 6     ein Teilschnitt entlang der Linie VI-VI von Fig. 5 und

Fig. 7     ein Teilquerschnitt entlang der Linie VII-VII von Fig. 5.

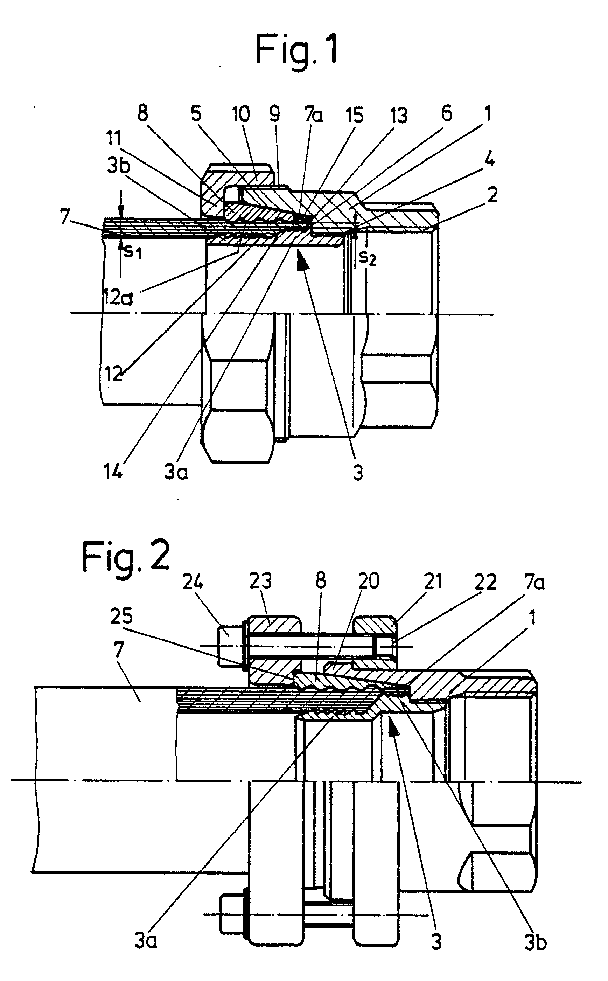

Fig. 1 zeigt eine Rohrverbindung, wobei ein Anschlussteil 1 als Anschlussnippel ausgebildet ist, welcher mittels eines Innengewindes 2 z. B. mit einem Fitting, einer Armatur oder einem Rohr mit Aussengewinde verbindbar ist. Auf der gegenüberliegenden Seite des Innengewindes 2 ist eine Stützhülse 3 mittels eines Gewindes 4 und/oder einer Löt- oder Klebeverbindung dicht und verdrehfest mit dem Anschlussteil 1 verbunden. Das Anschlussteil 1 weist eine konische Ausdrehung 5 auf, deren begrenzende Ringstirnfläche eine Anschlagfläche 6 für ein zu verbindendes Kunststoffrohr 7 und die Stützhülse 3 bildet. Die Stützhülse 3 ist in der Aussenkontur stufenförmig ausgebildet, wobei die von der Anschlagfläche 6 ausgehende Partie 3a im Aussendurchmesser grösser ausgebildet ist als die anschliessende Partie 3b, welche im Aussendurchmesser gleich oder geringfügig grösser ist als der Innendurchmesser des Kunststoffrohres 7.

Der Uebergang zwischen den beiden Partien 3a und 3b der Stützhülse 3 ist konisch ausgebildet. In der konischen Ausdrehung 5 ist eine am Aussenumfang konische Klemmhülse 8 angeordnet, welche einen in Längsrichtung verlaufenden radialen Schlitz aufweist. Eine auf ein Aussengewinde 9 des Anschlussteils 1 aufschraubbare Ueberwurfmutter 10 weist einen Bund 11 auf, mittels welchem beim Festziehen der Ueberwurfmutter 10 die Klemmhülse 8 aufgrund der konischen Ausbildung radial zusammengedrückt wird, wodurch das Kunststoffrohr 7 auf die Stützhülse 3 geklemmt wird.

Der Aussenumfang der Stützhülse 3 und der Innenumfang der Klemmhülse 8 sind mit umfangsmässigen Profilrillen versehen, wobei die Klemmhülse 8 und die im Aussendurchmesser kleinere Partie 3b der Stützhülse sägezahnförmige Rillen 12,bzw.12a mit abgerundeten Kanten aufweist. Die Profilrillen können hier z.B. auch wellenförmig ausgebildet sein. Durch die abgerundeten Profilkanten werden in diesem Bereich, wo die Zug- und Biegespannungen auftreten, nur geringe Kerbspannungen erzeugt. Die Partie 3a dagegen ist am Aussenumfang mit feinen, scharfkantigen Dichtrillen 13 versehen.

Das zu verbindende Kunststoffrohr 7 weist am Einsteckende eine Ausdrehung 14 auf, deren Aussendurchmesser gleich oder geringfügig kleiner ist als der Aussendurchmesser der Partie 3a der Stützhülse und deren Länge und konischer Uebergang der Stützhülse 3 angepasst ist. Die Ausdrehung ist grösser als der mittlere Rohrdurchmesser, vorzugsweise ist die Restwandstärke $S_2$ bei der Ausdrehung 1/3 bis 1/4 der Rohrwandstärke $S_1$. Die beschriebene Rohrverbindung wird vorzugsweise für dickwandige Kunststoffrohre verwendet, deren Wandstärke $S_1$ gleich oder grösser ist als 3 mm.

Die dünnwandigere Rohrpartie 7a der Einstecklänge bildet die dichtende Partie wobei durch die reduzierte Wandstärke bei Temperaturwechsel die Material-Ausdehnungsdifferenz wesentlich kleiner ist als bei der kraftschlüssigen Klemmpartie, so dass auch bei starken Temperaturwechseln immer eine dichte Rohrverbindung gewährleistet ist. Zusätzlich kann die Sicherheit gegen Undichtigkeit noch durch einen am Rohraussendurchmesser zwischen der Klemmhülse 8 und der Anschlagfläche 6 angeordneten Dichtring 15 aus Kunststoff verbessert werden.

Bei der in Fig. 2 dargestellten Ausführungsvariante sind lediglich die Verspannmittel für die Klemmhülse 8 anders ausgebildet. Das Anschlussteil 1 weist einen Bund 20 auf, an welchem ein mit Gewindebohrungen 22 versehener aufgeschobener Flansch 21 anliegt. Ein zweiter, über das Kunststoffrohr 7 aufgeschobener Flansch 23 wird mittels Spannschrauben 24 mit einer Anlagefläche 25 gegen die Klemmhülse 8 gezogen, wodurch das Rohrende gegen die Stützhülse 3 verspannt wird.

Dichtwirkung und Klemmwirkung werden wie beim vorher beschriebenen Ausführungsbeispiel durch die Partien 3a und 3b im Zusammenwirken mit der Klemmhülse 8 erzeugt.

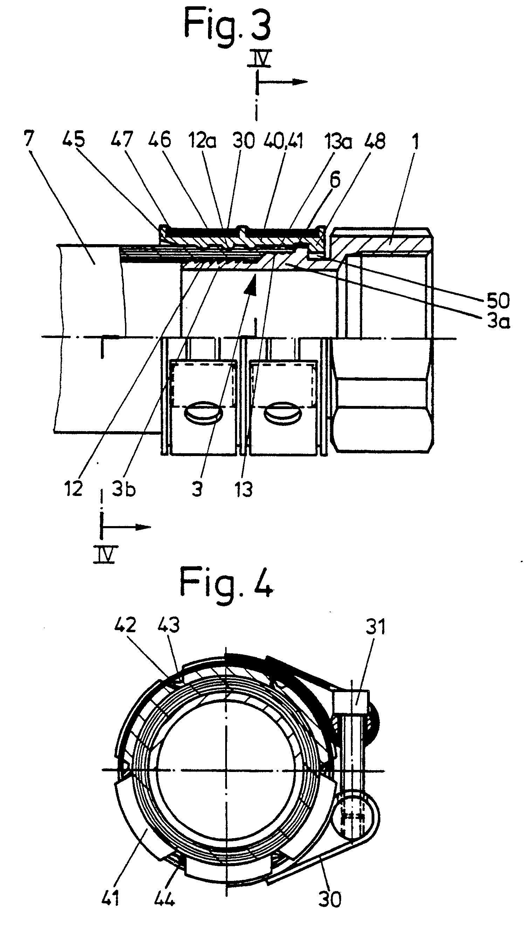

Die in den Figuren 3 und 4 gezeigte Ausführungsvariante der Rohrverbindung weist eine umfangsmässig mehrteilig ausgebildete Klemmhülse 40 auf, welche am Aussenumfang im Wesentlichen kreiszylindrisch ausgebildet ist und mittels Spannbändern 30 radial gegen das auf die Stützhülse 3 aufgeschobene Kunststoffrohr 7 verspannt wird.

Die Klemmhülse 40 besteht vorzugsweise aus sechs segmentförmigen Teilen 41, welche an einem umfangsmässigen Ende Anschlagnocken 42 aufweisen. Die Anschlagnocken sind durch Anordnung von Kerben 43 in Umfangsrichtung federnd bzw. nachgiebig ausgebildet (siehe Fig. 4).

Durch die Anlage der Anschlagnocken 42 im äusseren Umfangsbereich des nächstfolgenden, segmentförmigen Teiles 41 wird eine mit jeweils gleich breiten Spalten 44 gegebene, gleichmässig verteilte Lage der Teile 41 erreicht.

Beim Verspannen der Spannbänder 30 mittels der Schrauben 31 werden die einzelnen, segmentförmigen Teile 41 gleichmässig radial gegen das Kunststoffrohr 7 gespannt. Dabei werden die Anschlagnocken 42 verformt, und die Spalte 44 verengen sich gleichmässig, so dass auch nach dem Festklemmen der Kunststoffrohre 7 immer noch eine umfangsmässig gleichmässige Verteilung der Teile 41 gegeben ist. Somit ist auch eine um den ganzen Umfang gleichmässig verteilte radiale Spannkraft gewährleistet. Durch die Anordnung von mehreren Spalten 44 können diese auch bei grossen Toleranzen in den Rohrdurchmessern relativ klein gehalten werden.

Die beiden Spannbänder 30 sind in durch umfangsmässig verlaufende Stege 45 gebildete Ausnehmungen 46 angeordnet. An den Stegen 45 angeformte Vorsprünge 47 bilden eine Schnappverbindung zum Anklemmen der einzelnen, segmentförmigen Teile 41 an den Spannbändern 30, so dass eine Einheit, gebildet aus den Spannbändern 30 und der aus den Teilen 41 bestehende Klemmhülse 40 über das Kunststoffrohr 7 geschoben werden kann. Dadurch wird die Montage wesentlich vereinfacht.

Die segmentförmigen Teile 41 weisen an einem axialen Ende einen nach innen gerichteten Bund 48 auf, welcher jeweils im montierten Zustand in eine am Anschlussteil 1 angeordnete Ringnute 50 eingreift, wodurch die Einheit aus Klemmhülse 40 und Spannbändern 30 in axialer Richtung am Anschlussstück 1 fixiert ist. Bei dieser Ausführungsvariante ist das Anschlussstück 1 mit der Stützhülse 3 aus einem Teil gefertigt, wobei die Stützhülse 3 entsprechend den Ausführungen gemäss den Fig. 1 und 2 die Partien 3a und 3b und die entsprechenden Rillen 12 bzw. 13 aufweist.

Die segmentförmigen Teile 41 der Klemmhülse 40 weisen am Innenumfang entsprechende Rillen 12a und 13a auf, welche denen an der Stützhülse angeordneten Rillen vorzugsweise jeweils um eine halbe Rillendistanz versetzt, radial gegenüberliegend angeordnet sind. Klemmpartie und Dichtpartie entsprechen somit den zu den Fig. 1 und 2 beschriebenen Ausführungen.

Durch die Anordnung von zwei parallelen Spannbändern 30 ist gewährleistet, dass die radiale Pressung unabhängig von Toleranzen optimal auf die Dicht- und Klemmpartie aufgebracht werden kann.

Die Teile 41 der Klemmhülse 40 sind vorzugsweise aus einem Kunststoff hergestellt, der einerseits genügen hart ist, um durch die Rillen das Kunststoffrohr zu verformen, andererseits aber die Ausbildung eines federnden Anschlagnockens 42 gewährleistet.

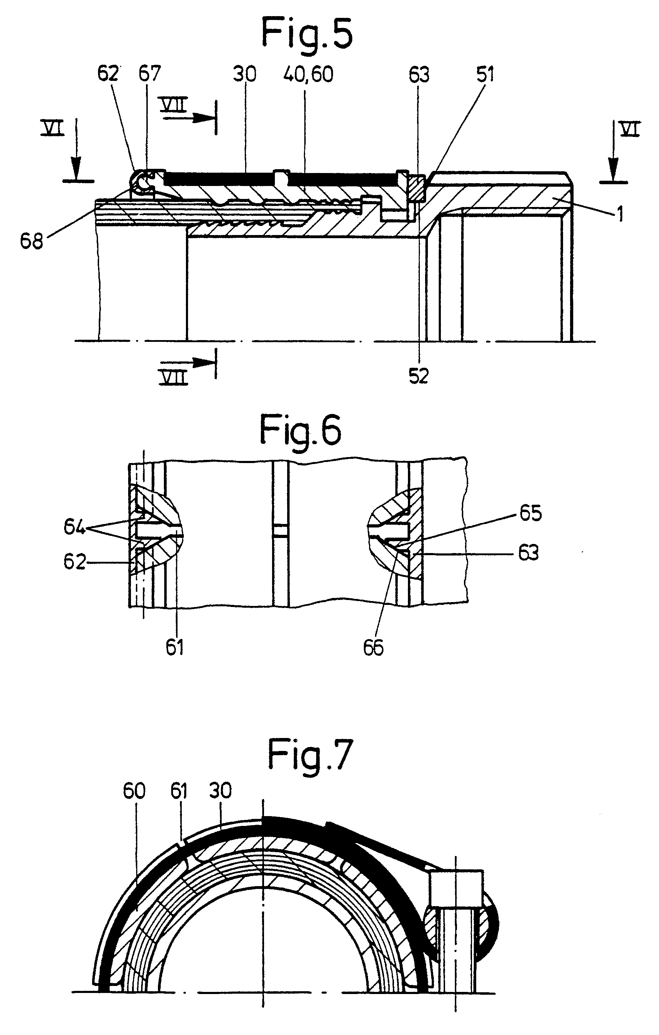

Bei der in den Fig. 5 bis 7 gezeigten Ausführungsvariante besteht die Klemmhülse 40 aus mindestens drei segmentförmigen Teilen 60 für kleinere Rohrdurchmesser, wobei im gezeigten Ausführungsbeispiel für grössere Rohrdurchmesser sechs Teile 60 dargestellt sind. Die segmentförmigen Teile 60 sind umfangsmässig mit gleichmässiger Distanz zueinander angeordnet, wodurch Spalte 61 entstehen. Für die Einhaltung einer gleichmässigen Distanz sind an den Stirnseiten der segmentförmigen Teile 60 Spreizringe 62 und 63 angeordnet, welche mit in die Spalte 61 eingreifenden federnden Vorsprüngen 64 versehen sind. Die federnden Vorsprünge 64 sind mit Anschrägungen 65 versehen, welche an abgeschrägten Anlageflächen 66 der segmentförmigen Teile 60 anliegen.

Beim Zusammenspannen der Spannhülse 40 mittels der Spannbänder 30 verringern sich die Spalte 61 gleichmässig, wobei jeweils die beiden federnden Vorsprünge 64 durch die schrägen Anlageflächen 66 etwas zusammengedrückt werden.

An der rohrseitigen Stirnseite weisen die segmentförmigen Teile 60 einen im Querschnitt annähernd kreisförmigen Ring-Wulst 67 auf, in welchen der Spreizring 62 mit einer entsprechenden Ausnehmung 68 eingeschnappt in axialer Richtung gehalten ist. Der Spreizring 63 ist im Querschnitt rechteckig ausgebildet und ist zwischen der Hülse 40 und einer stirnseitigen Anlagefläche 51 axial und auf einen Zentrier-Sitz 52 des Anschlussteils 1 radial gehalten.

Bei dieser Ausführungsvariante sind die segmentförmigen Teile 60 vorzugsweise aus Messing hergestellt, wobei die beiden Spreizringe 62, 63 vorzugsweise aus Kunststoff hergestellt sind.

Die Spreizringe 62, 63 gewährleisten ebenfalls eine umfangsmässig gleichmässige Verteilung der Teile 60, wodurch auch eine um den ganzen Umfang gleichmässig verteilte radiale Spannkraft gewährleistet ist.

Die übrige Ausbildung dieser Ausführungsvariante entspricht der zu den Fig. 3 und 4 beschriebenen Rohrverbindung.

## Ansprüche

1. Verbindung von Kunststoffrohren, insbesondere von dickwandigen Kunststoffrohren (7), mit einem Anschlussteil (1), welches eine Stützhülse (3) aufweist, auf wel-che das Rohr (7) bis zu einer Anschlagfläche (6) am Anschlussteil (1) aufschiebbar ist, mit einer am Aussenumfang des Rohres angeordneten und radial verformbaren Klemmhülse (8, 40), welche mittels Spannmitteln (10, 21, 23, 24, 40) gegen das Kunststoffrohr (7) drückbar ist, wobei der Innenumfang der Klemmhülse und der Aussenumfang der Stützhülse (3) mit Profilrillen (12a, 12, 13) versehen ist, dadurch gekennzeichnet, dass die Stützhülse (3) mit im Aussendurchmesser unterschiedlichen Partien (3a, 3b) und Profilrillen (13, 12) ausgebildet ist, wobei die im Aussendurchmesser grössere Partie (3a), ausgehend von der Anschlagfläche (6), eine einer Ausdrehung (14) am Rohr (7) entsprechende Länge und als Dichtpartie feine, scharfkantige Dichtrillen (13) aufweist, welche gegenüber den Profilrillen (12) an der im Durchmesser kleineren Partie weniger tief ausgebildet sind.

2. Rohrverbindung nach Anspruch 1, dadurch gekennzeichnet, dass der Uebergang zwischen den beiden Partien (3a,3b) der Stützhülse (3) konisch ausgebildet ist.

3. Rohrverbindung nach Anspruch 1 oder 2, dadurch gekennzeichnet, dass mindestens eine Teillänge der Klemmhülse (8, 40) und die im Aussendurchmesser kleinere Partie (3b) der Stützhülse (3) wellenförmige oder sägezahnförmige Profilrillen (12, bzw. 12a) aufweist.

4. Rohrverbindung nach einem der Ansprüche 1 bis 3, dadurch gekennzeichnet, dass die Klemmhülse (40) umfangsmässig mehrteilig, vorzugsweise drei- oder sechsteilig, ausgebildet ist und mittels mindestens einem Spannband (30) radial zusammendrückbar ist.

5. Rohrverbindung nach Anspruch 4, dadurch gekennzeichnet, dass jedes Teil (41) der Klemmhülse (40) umfangsmässig gleichmässige Abstände gewährleistende, federnde Anschlagnocken (42) aufweist.

6. Rohrverbindung nach Anspruch 4, dadurch gekennzeichnet, dass mindestens an einer Stirnseite der segmentförmigen Teile (60) eine Spreizhülse (62, 63) angeordnet ist, welche mit in die Spalte (61) zwischen den Teilen (60) eingreifenden federnden Vorsprüngen (64) versehen sind.

7. Rohrverbindung nach Anspruch 6, dadurch gekennzeichnet, dass der an der rohrseitigen Stirnseite angeordnete Spreizring (62) mittels einer Schnappverbindung (67, 68) axial an den Teilen (60) gehalten ist.

8. Rohrverbindung nach einem der Ansprüche 4 bis 7, dadadurch gekennzeichnet, dass zwei Spannbänder (30) nebeneinander angeordnet sind, wobei eines im Wesentlichen um den Bereich der Dichtpartie angeordnet ist.

9. Rohrverbindung nach einem der Ansprüche 4 bis 8, dadurch gekennzeichnet, dass die Klemmhülse (40) einen Bund (48) aufweist, welcher in eine Ringnute (50) des Anschlussteils (1) eingreift.

10. Rohrverbindung nach einem der Ansprüche 1 bis 3, dadurch gekennzeichnet, dass die Klemmhülse (8) am Aussenumfang konisch ausgebildet ist und gegen einen Innenkonus (5) des Anschlussteiles (1) spannbar ist.

11. Rohrverbindung nach Anspruch 10, dadurch gekennzeichnet, dass die konische Klemmhülse (8) mittels eines Flansches (23) und Spannschrauben (24) gegen den Innenkonus spannbar ist.

12. Rohrverbindung nach Anspruch 10, dadurch gekennzeichnet, dass die konische Klemmhülse (8) mittels einer auf das Anschlussteile (1) aufschraubbaren Ueberwurfmutter (10) gegen den Innenkonus spannbar ist.

13. Rohrverbindung nach einem der Ansprüche 1 bis 12, dadurch gekennzeichnet, dass die Ausdrehung (14) im Ausdrehdurchmesser grösser ist als der mittlere Rohrdurchmesser, wobei vorzugsweise die Restwandstärke 1/3 bis 1/4 der Rohrwandstärke beträgt.

## Claims

1. Connection for plastic pipes, in particular thick-walled plastic pipes (7), having a connection part (1), which has a support sleeve (3) onto which the pipe (7) can be pushed up to a stop surface (6) on the connection part (1), having a radially deformable clamping sleeve (8, 40), which is disposed on the outer periphery of the pipe and which can be pressed by means of tensioning means (10, 21, 23, 24, 40) against the plastic pipe (7), wherein the inner periphery of the clamping sleeve and the outer periphery of the support sleeve (3) are provided with profile grooves (12a, 12, 13), characterised in that the support sleeve (3) is formed with parts (3a, 3b) of different diameter and profile grooves (13, 12), wherein the part (3a) having the larger diameter, starting from the stop surface (6), has a length corresponding to a bore (14) in the pipe (7), and, as a sealing part, fine, sharp-edged sealing grooves (13), which are not as deep in the part having the smaller diameter as in the profile grooves (12).

2. Pipe connection as in claim 1, characterised in that the transition between the two parts (3a, 3b) of the support sleeve (3) is in conical form.

3. pipe connection as in claim 1 or 2, characterised in that at least a part of the length of the clamping sleeve (8, 40) and the part (3b) of the support sleeve (3) having the smaller outer diameter have undulating or saw-tooth profile grooves (12 or 12a).

4. Pipe connection as in any of claims 1 to 3, characterised in that the periphery of the clamping sleeve (40) is in multi-part, preferably three- or six-part form, and can be pressed together radially by means of at least one tensioning strap (30).

5. Pipe connection as in claim 4, characterised in that each part (41) of the clamping sleeve (4) has on its periphery resilient stop cams (42) ensuring uniform distances.

6. Pipe connection as in claim 4, characterised in that there is disposed on at least one end face of the segment-shaped parts (60) a splay sleeve (62, 63), which is provided with resilient projections (64) which project into the gap (61) between the parts (60).

7. Pipe connection as in claim 6, characterised in that the splay ring (62), which is disposed on the end face on the pipe side, is held axially against the parts (60) by means of a snap connection (67, 68).

8. Pipe connection as in any of claims 4 to 7, characterised in that two tensioning straps (30) are disposed adjacent to one another, wherein one is substantially disposed about the region of the sealing part.

9. Pipe connection as in any of claims 4 to 8, characterised in that the clamping sleeve (40) has a collar (48), which engages in an annular groove (50) in the connection part (1).

10. Pipe connection as in any of claims 1 to 3, characterised in that the clamping sleeve (8) is of conical shape on the outer periphery and can be tensioned against an inner cone (5) of the connection part (1).

11. Pipe connection as in claim 10, characterised in that the conical clamping sleeve (8) can be tensioned by means of a flange (23) and tensioning screws (24) against the inner cone.

12. Pipe connection as in claim 10, characterised in that the conical clamping sleeve (8) can be tensioned by means of a union nut (10), which can be screwed onto the connection part (1), against the inner cone.

13. Pipe connection as in any of claims 1 to 12, characterised in that the bore diameter of the bore (14) is greater than the average pipe diameter, wherein preferably the residual wall thickness is 1/3 to 1/4 of the pipe wall thickness.

## Revendications

1. Raccordement de tuyaux en matière plastique, notamment de tuyaux en matière plastique (7) à parois épais-ses, comportant une partie de raccord (1), qui présente une douille d'appui (3), sur laquelle le tuyau (7) peut être enfoncé jusqu'à une surface de butée (6) sur la partie de raccord (1), un manchon de serrage (8, 40) disposé sur le pourtour extérieur du tuyau et déformable radialement, qui peut être serré à l'aide de moyens de serrage (10, 21, 23, 24, 40) contre le tuyau en matière plastique (7), le pourtour intérieur du manchon de serrage et le pourtour extérieur de la douille d'appui (3) étant pourvus de rainures profilées (12a, 12, 13), caractérisé en ce que la douille d'appui (3) est constituée de parties (3a, 3b) de diamètre extérieur différent et de rainures profilées (13, 12) dont la partie (3a), ayant le plus grand diamètre extérieur, présente en partant de la surface de butée (6) une longueur correspondant à un évidement (14) ou cavité réalisé avec un tour sur le tuyau (7), et comme partie d'étanchéité de fines rainures d'étanchéité (13) à arêtes vives, qui sont réalisées moins profondes que les rainures profilées (12) de la partie de plus petit diamètre.

2. Raccordement de tuyaux selon la revendication 1, caractérisé en ce que la transition entre les deux parties (3a, 3b) de la douille d'appui (3) présente un profil conique.

3. Raccordement de tuyaux selon la revendication 1 ou 2, caractérisé en ce qu'au moins une longueur partielle du manchon de serrage (8, 40) et la partie (3b) de la douille d'appui (3) ayant le plus petit diamètre extérieur présente des rainures profilées (12 ou 12a) en forme d'ondulations ou de dents de scie.

4. Raccordement de tuyaux selon l'une des revendications 1 à 3, caractérisé en ce que le manchon de serrage (40) est constitué de plusieurs parties sur son pourtour, de préférence trois ou six parties et en ce qu'il est compressible radialement à l'aide d'au moins un collier de serrage (30).

5. Raccordement de tuyaux selon la revendication 4, caractérisé en ce que chaque partie (41) du manchon de serrage (40) présente sur son pourtour des saillies de butée (42) élastiques garantissant des intervalles uniformes.

6. Raccordement de tuyaux selon la revendication 4, caractérisé en ce qu'est disposée au moins sur une face frontale des parties en forme de segments une douille d'écartement (62, 63), pourvue de saillies (64) élastiques s'engageant dans les fentes (61) aménagées entre les parties (60).

7. Raccordement de tuyaux selon la revendication 6, caractérisé en ce que l'anneau d'écartement (62) disposé sur la face frontale du côté tuyau est maintenu axialement entre les parties (60) au moyen d'un assemblage à encliquetage.

8. Raccordement de tuyaux selon l'une des revendications 4 à 7, caractérisé en ce que les deux colliers de serrage (30) sont disposés côte à côte, l'un étant essentiellement disposé autour de la région propre à la partie d'étanchéité.

9. Raccordement de tuyaux selon l'une des revendications 4 à 8, caractérisé en ce que le manchon de serrage (40) présente un collet (48) qui s'engage dans une rainure circulaire (50) de la partie de raccord (1).

10. Raccordement de tuyaux selon l'une des revendications 1 à 3, caractérisé en ce que le manchon de serrage (8) présente un pourtour extérieur de forme conique et peut être serré contre un cône intérieur (5) de la partie de raccord (1).

11. Raccordement de tuyaux selon la revendication 10, caractérisé en ce que le manchon de serrage conique (8) peut être serré contre un cône intérieur au moyen d'une bride (23) et de vis de serrage (24).

12. Raccordement de tuyaux selon la revendication 10, caractérisé en ce que le manchon de serrage (8) conique peut être serré contre le cône intérieur au moyen d'un écrou d'accouplement (10) vissable sur la partie de raccord (1).

13. Raccordement de tuyaux selon l'une des revendications 1 à 12, caractérisé en ce que l'évidement (14) réalisé au tour a un diamètre supérieur au diamètre moyen du tuyau, l'épaisseur résiduelle de paroi représentant 1/3 à 1/4 de l'épaisseur de paroi du tuyau.

# Fig.1

# Fig.2

# Fig. 3

7  45  47  46  12a  30  40,41  13a  48  1

6

50
3a

12  3b  3  13

# Fig. 4

42  43  31

41  44  30

# Fig.5

# Fig.6

# Fig.7